# EUROPEAN PATENT APPLICATION

(11) **EP 3 617 267 A1**
(43) Date of publication of application: **04.03.2020**
(21) Application number: 18790615.1
(22) Date of filing: 21.03.2018
(51) Int. Cl.: C08L 27/06, C08L 25/14, C08K 3/22, C08K 3/28, C08K 5/17

(54) **VINYL CHLORIDE RESIN LATEX COMPOSITION AND METHOD FOR PREPARING SAME**

(30) Priority: 28.04.2017 KR 20170055673
(71) Applicant: Hanwha Chemical Corporation, Seoul 04541 (KR)
(72) Inventor: KIM, Yeo Jin, Seoul 04358 (KR); KIM, Jae Song, Daejeon 34067 (KR); SHIN, Yeon Ran, Ulsan 44727 (KR); JANG, Tae Young, Daejeon 34117 (KR)
(74) Representative: Gevers Patents
(86) International application number: PCT/KR2018/003299
(87) International publication number: WO 2018/199477

(57) **Abstract**

A method of preparing a vinyl chloride-based resin latex composition having greatly improved mechanical stability by introducing a solid-phase styrene/acrylic resin, and a vinyl chloride-based resin latex composition prepared thereby, are provided.

## Description

### [Technical Field]

The present application is based on, and claims priority from, Korean Patent Application No. 10-2017-0055673, filed on April 28, 2017, the disclosure of which is hereby incorporated by reference herein in its entirety.

The present invention relates to a vinyl chloride-based resin latex composition having greatly improved mechanical stability and a preparation method thereof.

### [Background Art]

Vinyl chloride paste resin (polyvinyl chloride paste resin, hereinafter, referred to as "PSR") is a kind of general purpose resin that has been widely used for construction supplies, daily necessities such as wallpapers, artificial leather, fabrics, sheets, films, etc., and industrial supplies.

The vinyl chloride paste resin is prepared by preparing a latex by emulsion polymerization or seed emulsion polymerization in a polymerization system including a vinyl chloride monomer together with a polymerization initiator, an emulsifier (a surfactant), a catalyst, and other additives, and then drying the latex to obtain the resin in a powder form.

Latex is an emulsion mixture of a vinyl chloride resin and water produced as a result of polymerization, and its stability varies according to various factors such as the amount of remaining vinyl chloride monomer, the kind and the content of the emulsifier, etc.

If mechanical stability of the latex is poor, agglomeration of the vinyl chloride resin in the latex occurs at the time of applying a shearing force for mixing or processing, and as a result, flowability is deteriorated, which makes it difficult to use.

### [Disclosure]

### [Technical Problem]

In order to solve the problems of the prior art as described above, an object of the present invention is to provide a vinyl chloride-based resin latex composition having greatly improved mechanical stability, and a preparation method thereof.

### [Technical Solution]

To achieve the above object, one embodiment of the present invention provides a method of preparing a vinyl chloride-based resin latex composition, the method including the steps of:
mixing a vinyl chloride-based resin latex including a vinyl chloride-based resin and a solid-phase styrene/acrylic resin to prepare a mixture; and
adding a basic additive to the mixture,
wherein the styrene/acrylic resin is mixed in an amount of 2 parts by weight to 50 parts by weight with respect to 100 parts by weight of the solid content including the vinyl chloride-based resin in the vinyl chloride-based resin latex.

Another embodiment of the present invention provides a vinyl chloride-based resin latex composition which is prepared by the above method, the vinyl chloride-based resin latex composition including a vinyl chloride-based resin latex including a vinyl chloride-based resin, a styrene/acrylic resin, and a basic additive, wherein the styrene/acrylic resin is included in an amount of 2 parts by weight to 50 parts by weight with respect to 100 parts by weight of the solid content including the vinyl chloride-based resin in the vinyl chloride-based resin latex.

### [Effect of the Invention]

According to a method of preparing a vinyl chloride-based resin latex composition of the present invention, a vinyl chloride-based resin latex is mixed with a solid-phase styrene/acrylic resin, thereby preparing the vinyl chloride-based resin latex composition having improved mechanical stability, in which agglomeration of latex is prevented without modification of the vinyl chloride-based resin itself.

Accordingly, the vinyl chloride-based resin latex composition prepared according to the preparation method may be usefully applied to PVC leather or textile adhesives, gravure ink binders for wallpaper, inkjet paper or absorbent layers of films, non-combustible paints for wood or exterior wall panels, non-combustible coatings for non-woven fabrics, air filters, automotive carpets, etc.

### [Brief Description of Drawings]

FIG. 1 is a photograph showing a state of an aqueous vinyl chloride/vinyl acetate copolymer resin latex composition prepared in Example 1, when mixed at 7000 rpm for a mixing time of 2 hours, and
FIG. 2 is a photograph showing a state of an aqueous vinyl chloride/vinyl acetate copolymer resin latex composition prepared in Comparative Example 2, when mixed at 7000 rpm for a mixing time of 20 minutes.

### [Detailed Description of the Embodiments]

Hereinafter, the present invention will be described in more detail.

Further, while the present invention is susceptible to various modifications and alternative forms, specific embodiments will be illustrated and described in detail as follows.

It should be understood, however, that the description is not intended to limit the present invention to the particular forms disclosed, but on the contrary, the intention is to cover all modifications, equivalents, and alternatives falling within the spirit and scope of the invention.

The term "including", when used in this specification, specify the presence of stated features, regions, integers, steps, operations, elements, and/or components, but does not preclude the presence or addition of other features, regions, integers, steps, operations, elements, and/or components.

Hereinafter, a vinyl chloride-based resin latex composition of the present invention and a preparation method thereof will be described in more detail.

A method of preparing a vinyl chloride-based resin latex composition according to one embodiment of the present invention may include the steps of:
mixing a vinyl chloride-based resin latex including a vinyl chloride-based resin and a solid-phase styrene/acrylic resin to prepare a mixture (Step 1); and
adding a basic additive to the mixture (Step 2),
wherein the styrene/acrylic resin is mixed in an amount of 2 parts by weight to 50 parts by weight with respect to 100 parts by weight of the solid content including the vinyl chloride-based resin in the vinyl chloride-based resin latex.

In the present invention, the vinyl chloride-based resin latex composition refers to a composition in the form of an emulsion, and may include a solid-phase styrene/acrylic resin which is dissolved in the vinyl chloride-based resin latex including the vinyl chloride-based resin or may include a dispersion of a core-shell structure which is formed by the vinyl chloride-based resin and the styrene/acrylic resin.

Hereinafter, each step of the method of preparing the vinyl chloride-based resin latex composition according to one embodiment of the present invention will be described in more detail. Step 1 is a step of preparing the mixture of the vinyl chloride-based resin latex including the vinyl chloride-based resin and the solid-phase styrene/acrylic resin.

The vinyl chloride-based resin latex may have a water dispersion or emulsion form, in which primary particles of the vinyl chloride-based resin latex having a size of 0.1 µm to several µm and including the vinyl chloride-based resin are dispersed in water or deionized water.

In the vinyl chloride-based resin latex, the vinyl chloride-based resin may be a homopolymer obtained by homopolymerizing a vinyl chloride monomer, or a (co)polymer obtained by copolymerizing the vinyl chloride monomer and a comonomer copolymerizable therewith.

The vinyl chloride-based resin latex may be prepared by polymerizing the vinyl chloride monomer alone or the vinyl chloride monomer and the comonomer copolymerizable therewith. In this regard, the polymerization method is not particularly limited, but may be performed according to a common polymerization method known in the art to which the present invention pertains, such as fine suspension polymerization, emulsion polymerization, seed emulsion polymerization, etc.

For example, the vinyl chloride-based resin latex may be prepared by adding the vinyl chloride monomer alone or the mixture of the vinyl chloride monomer and the comonomer copolymerizable therewith, and optionally an emulsifier and a polymerization initiator to an aqueous solvent, performing homogenization, and then performing fine suspension polymerization, or by mixing the vinyl chloride monomer alone or the mixture of the vinyl chloride monomer and the comonomer copolymerizable therewith with the emulsifier and a water-soluble polymerization initiator in an aqueous medium, and then performing emulsion polymerization or seed emulsion polymerization.

The comonomer copolymerizable with the vinyl chloride monomer may specifically include vinyl esters such as vinyl acetate, vinyl propionate, vinyl stearate, etc.; vinyl ethers having an alkyl group such as methyl vinyl ether, ethyl vinyl ether, octyl vinyl ether, lauryl vinyl ether, etc.; vinylidene halides such as vinylidene chloride, etc.; unsaturated carboxylic acids and acid anhydrides thereof such as acrylic acid, methacrylic acid, fumaric acid, maleic acid, itaconic acid, maleic anhydride, itaconic anhydride, etc.; unsaturated carboxylic acid esters such as methyl acrylate, ethyl acrylate, monomethyl maleate, dimethyl maleate, butylbenzyl maleate, etc.; aromatic vinyl compounds such as styrene, α-methyl styrene, divinyl benzene, etc.; unsaturated nitriles such as acrylonitrile, methacrylonitrile, etc.; olefins such as ethylene, propylene, etc.; crosslinkable monomers such as diallylphthalate, etc., and any one thereof or a mixture of two or more thereof may be used.

Among them, in terms of improving compatibility with the vinyl chloride monomer and compatibility of the polymer and the styrene/acrylic resin after polymerization, the comonomer may be vinyl esters or (meth)acrylic acid and esters thereof, more specifically, vinyl acetate, acrylic acid, (meth)acrylic acid, or a mixture thereof.

More specifically, the vinyl chloride-based resin may be a homopolymer obtained by homopolymerizing the vinyl chloride monomer; or a vinyl chloride/vinyl acetate copolymer or a vinyl chloride/acrylic copolymer obtained by copolymerizing the vinyl chloride monomer with a vinyl acetate-based compound (e.g., vinyl acetate, etc.) or an acrylic compound (e.g., acrylic acid, etc.) as the comonomer.

These polymers have excellent gelation behavior at the time of molding, and the melt viscosity of the resin may be easily controlled.

Further, when the vinyl chloride-based resin includes the vinyl chloride/vinyl acetate copolymer, the vinyl chloride/vinyl acetate copolymer may be prepared by polymerizing the vinyl chloride monomer and the vinyl acetate monomer at a weight ratio of 9:1 to 3:7, more specifically, 8:2 to 3:7, and much more specifically 7:3 to 5:5.

Further, when the vinyl chloride-based resin includes the vinyl chloride/acrylic copolymer, the vinyl chloride/acrylic copolymer may be prepared by polymerizing the vinyl chloride monomer and the acrylic monomer at a weight ratio of 9:1 to 5:5, and more specifically, 8:2 to 5:5.

When the weight ratio of the monomers constituting the copolymer meets the above condition, it is easy to control the gelation behavior and the melt viscosity of the resin.

Further, to achieve more excellent dispersibility through control of polymerization conditions during the polymerization, the particle size of the vinyl chloride-based resin latex, the polymerization degree or the weight average molecular weight of the vinyl chloride resin may be controlled.

Specifically, the vinyl chloride-based resin latex applicable in the present invention may have an average particle size (D₅₀) of 0.1 µm to several µm, and specifically 0.1 µm to 1 µm.

When the vinyl chloride-based resin latex has the above-described average particle size, excellent dispersibility may be achieved without concern about agglomeration between the vinyl chloride-based resin latex particles in the vinyl chloride-based resin latex composition, and as a result, the mechanical stability of the vinyl chloride-based resin latex composition may be improved.

In addition, considering that the effects obtained by controlling the particle size of the vinyl chloride-based resin latex are remarkable, the vinyl chloride-based resin particle may have more specifically have an average particle size (D₅₀) of 0.1 µm to 0.5 µm.

Meanwhile, in the present invention, the average particle size (D₅₀) of the vinyl chloride-based resin latex may be measured by a common method of measuring a particle size distribution such as optical microscope observation, light scattering measurement, etc., and specifically, by using a Malvern Zetasizer or Master Sizer.

Further, the vinyl chloride-based resin latex applicable in the present invention may have a weight average molecular weight (Mw) of about 45,000 g/mol to about 300,000 g/mol.

When the vinyl chloride-based resin latex has a weight average molecular weight in the above range, its dispersibility in the vinyl chloride-based resin latex composition may be improved, thereby improving mechanical stability.

In the present invention, the weight average molecular weight of the vinyl chloride-based resin latex is a value in terms of polystyrene standards, as measured by gel permeation chromatography.

As descried above, considering that the effects of improving the resin latex composition such as improvement of melt viscosity and dispersibility are remarkable by controlling the kind, the weight average molecular weight, and the average particle size of the vinyl chloride-based resin in the vinyl chloride-based resin latex composition, the vinyl chloride-based resin latex may include the vinyl chloride homopolymer, and may have a weight average molecular weight of 45,000 g/mol to 150,000 g/mol and an average particle size (D₅₀) of 0.1 µm to 0.7 µm.

Further, the vinyl chloride-based resin latex may include the vinyl chloride/vinyl acetate copolymer obtained by polymerizing the vinyl chloride monomer and the vinyl acetate monomer more specifically at a weight ratio of 8:2 to 3:7, and much more specifically at a weight ratio of 7:3 to 5:5 and may have a weight average molecular weight of 45,000 g/mol to 150,000 g/mol, and an average particle size (D₅₀) of 0.1 µm to 0.7 µm.

Further, the vinyl chloride-based resin latex may include the vinyl chloride/acrylic copolymer obtained by polymerizing the vinyl chloride monomer and the acrylic monomer at a weight ratio of 8:2 to 5:5 and may have a weight average molecular weight of 45,000 g/mol to 200,000 g/mol and an average particle size (D₅₀) of 0.1 µm to 0.7 µm.

Further, the solid content containing the vinyl chloride-based resin in the vinyl chloride-based resin latex may be 30% by weight to 60% by weight, and more specifically 40% by weight to 60% by weight, which may vary depending on the polymerization method.

Meanwhile, the styrene/acrylic resin to be mixed with the vinyl chloride-based resin latex is a styrene/acrylic copolymer resin obtained by polymerizing a styrene-based monomer and an acrylic monomer, and the styrene/acrylic resin is added during preparation of the vinyl chloride-based resin latex composition according to the present invention to prevent agglomeration of the vinyl chloride-based resin, and as a result, it functions to improve mechanical stability of the vinyl chloride-based resin latex composition.

Further, the styrene/acrylic resin is an alkaline soluble resin, and is used in a solid phase when mixed with the vinyl chloride-based resin latex, but the styrene/acrylic resin is dissolved by the basic additive which is added in the subsequent step, thereby forming a homogeneous solution phase.

As a result, agglomeration of the vinyl chloride-based resin latex may be prevented even though a shear force is applied to the vinyl chloride-based resin latex composition during a process for processing, etc., thereby improving mechanical stability of the vinyl chloride-based resin latex composition.

The shape of the solid-phase styrene/acrylic resin may have, but is not particularly limited to, various forms such as a spherical form, an oval form, a rod-shaped form, a rectangular form, a flaky form, a plate-shaped form, a fibrous form, etc.

The styrene/acrylic resin may be prepared by polymerizing the styrene-based monomer and the acrylic monomer using a common method, specifically, by bulk polymerization or emulsion polymerization.

In this regard, the effects obtained by using the styrene/acrylic resin may be further improved by controlling the kind and the content of the monomer substances.

Specifically, the styrene/acrylic resin applicable in the present invention may be a copolymer obtained by polymerizing the styrene-based monomer and the acrylic monomer at a weight ratio of 60:40 to 80:20.

The styrene/acrylic resin prepared by polymerizing the monomers at the above weight ratio may have more excellent dispersibility, and excellent compatibility with the vinyl chloride-based resin, thereby preventing agglomeration of the vinyl chloride-based resin, and as a result, the mechanical stability of the vinyl chloride-based resin latex composition may be further improved.

Taking into consideration the remarkable effects, the styrene/acrylic resin may be more specifically a copolymer obtained by polymerizing the styrene-based monomer and the acrylic monomer at a weight ratio of 60:40 to 70:30.

Meanwhile, the styrene-based monomer applicable in the preparation of the styrene/acrylic resin may be specifically styrene alone, or styrene together with alpha-alkylstyrene monomer such as alpha-methylstyrene.

Further, when the mixture of styrene and alpha-alkylstyrene monomer is used as the styrene monomer, styrene and alpha-alkylstyrene may be mixed at a weight ratio of 50:50 to 90:10.

When they are mixed with each other at the above mixing ratio, more excellent compatibility with respect to the vinyl chloride resin may be achieved.

Further, the acrylic monomer may be specifically acrylic acid alone, or acrylic acid together with alkyl acrylate.

Further, when the mixture of acrylic acid and alkyl acrylate is used as the acrylic monomer, acrylic acid and alkyl acrylate may be mixed at a weight ratio of 80:20 to 90:10.

When they are mixed with each other at the above mixing ratio, more excellent compatibility with respect to the vinyl chloride resin may be achieved.

Further, the alkyl in the alkyl acrylate may be a linear or branched alkyl group having 1 to 20 carbon atoms, such as methyl, ethyl, etc.

Further, to achieve a more excellent effect of preventing agglomeration of the vinyl chloride-based resin by controlling the polymerization conditions during the polymerization reaction, the degree of polymerization or the weight average molecular weight of the styrene/acrylic resin may be controlled.

Specifically, the styrene/acrylic resin may have a weight average molecular weight of 1000 g/mol to 20,000 g/mol.

When the styrene/acrylic resin has the above weight average molecular weight, the styrene/acrylic resin may have more excellent compatibility with respect to the vinyl chloride-based resin to prevent agglomeration of the vinyl chloride-based resin, and as a result, mechanical stability of the vinyl chloride-based resin latex composition may be further improved.

Taking into consideration the remarkable effects, the styrene/acrylic resin may have a weight average molecular weight of more specifically 1500 g/mol to 15,000 g/mol, and much more specifically 5000 g/mol to 14,000 g/mol.

Such a styrene/acrylic resin may be mixed in an amount of 2 parts by weight to 50 parts by weight with respect to 100 parts by weight of the solid content containing the vinyl chloride-based resin in the vinyl chloride-based resin latex.

If the content of the styrene/acrylic resin is less than 2 parts by weight, the effect of improving the mechanical stability of the vinyl chloride-based resin latex composition by adding the styrene/acrylic resin is insignificant, and thus agglomeration of the vinyl chloride-based resin occurs within several minutes when a shear force is applied.

Further, if the styrene/acrylic resin exists in an excessive amount of more than 50 parts by weight, the mechanical stability of the vinyl chloride-based resin latex composition may be deteriorated, or viscosity may be increased, or the styrene/acrylic resin may not be dissolved to exist in a solid phase due to agglomeration between excess styrene/acrylic resins and reduction in dispersibility, and as a result, there is concern about deterioration in the appearance characteristics of a molded article.

Taking into consideration the remarkable effects obtained by controlling the content of the styrene/acrylic resin, the styrene/acrylic resin may be specifically mixed in an amount of 2 parts by weight to 20 parts by weight, and more specifically 2 parts by weight to 10 parts by weight with respect to 100 parts by weight of the solid content containing the vinyl chloride-based resin in the vinyl chloride-based resin latex.

Next, Step 2 in the method of preparing the vinyl chloride-based resin latex composition according to one embodiment of the present invention is a step of preparing the vinyl chloride-based resin latex composition by adding the basic additive to the mixture of the vinyl chloride-based resin latex and the styrene/acrylic resin, which is prepared in Step 1.

The basic additive may specifically include: ammonia; amine-based compounds such as DMEA (dimethylethanolamine) and MEA (monoethanolamine); or hydroxides such as potassium hydroxide, sodium hydroxide, etc., and any one thereof or a mixture of two or more thereof may be used.

Among them, ammonia may be used, taking into consideration the improvement effect obtained by using the basic additive.

The basic additive serves to neutralize the styrene/acrylic resin when the mixture of the vinyl chloride-based resin latex and the styrene/acrylic resin is added, and its addition amount may be determined according to the acid value and the amount of the styrene/acrylic resin.

Further, the basic additive may be added, in a solid phase such as powder, etc., to the mixture prepared in Step 1, but may be added in a solution phase, taking into consideration the homogeneous mixing of the basic additive in the mixture and the resulting solubility increase of the styrene/acrylic resin.

Specifically, the basic additive may be added in an aqueous solution state in which the basic additive is dissolved at a concentration of 1% (W/V) to 30% (W/V) in water.

When the aqueous solution with the concentration within the above range is used, maximum solubility of the styrene/acrylic resin may be obtained when an appropriate amount thereof is used.

Further, the basic additive may be added in such an amount that the vinyl chloride-based resin latex composition becomes neutral to weakly alkaline, specifically at pH of 7 to 9.

Further, addition of the basic additive may be performed at a temperature of 40°C to 90°C.

When the basic additive is added within the above temperature range, solubility of the styrene/acrylic resin may be further improved.

If the temperature is lower than 40°C, there is concern about insufficient solubility of the styrene/acrylic resin, and if the temperature is higher than 90°C, there is concern about a side reaction such as degradation of the reactants, etc.

More specifically, addition of the basic additive may be performed at a temperature of 60°C to 80°C.

Further, to achieve the above temperature conditions, a process of heating the mixture prepared in Step 1 may be optionally performed.

In this regard, the heating process may be performed according to an ordinary method in the art.

After adding the basic additive, and optionally other additives, a stirring process may be optionally performed to increase miscibility.

The stirring process may be performed by an ordinary mixing method. The stirring conditions are not particularly limited, but the stirring process may be performed, for example, at 500 rpm to 3000 rpm for several minutes to several hours.

Resulting from Step 2, the aqueous vinyl chloride-based resin latex composition including the styrene/acrylic resin in the vinyl chloride-based resin latex including the vinyl chloride-based resin is prepared.

The vinyl chloride-based resin latex composition prepared according to the above method may exhibit remarkably improved mechanical stability, because the styrene/acrylic resin added in a solid phase may prevent agglomeration of the vinyl chloride-based resin.

Accordingly, the vinyl chloride-based resin latex composition may be usefully applied to PVC leather or textile adhesives, gravure ink binders for wallpaper, inkjet paper or absorbent layers of films, non-combustible paints for wood or exterior wall panels, non-combustible coatings for non-woven fabrics, air filters, automotive carpets, etc.

According to another embodiment of the present invention, the vinyl chloride-based resin latex composition prepared by the above preparation method is provided.

Specifically, the vinyl chloride-based resin latex composition may include the vinyl chloride-based resin latex including the vinyl chloride-based resin, the styrene/acrylic resin, and the basic additive, wherein the styrene/acrylic resin may be included in an amount of 2 parts by weight to 50 parts by weight with respect to 100 parts by weight of the vinyl chloride-based resin.

In this regard, the vinyl chloride-based resin latex, the styrene/acrylic resin, and the basic additive are the same as described above.

Further, the vinyl chloride-based resin latex composition may be in a homogeneous solution phase, in which the styrene/acrylic resin is dissolved in the vinyl chloride-based resin latex including the vinyl chloride-based resin, or in an emulsion phase, in which a core-shell structure of the vinyl chloride-based resin and the styrene/acrylic resin is dispersed.

Further, the vinyl chloride-based resin latex composition may be neutral to weakly alkaline, specifically at pH of 7 to 9 by adding the basic additive.

Hereinafter, the present invention will be described in more detail with reference to examples according to the present invention.

However, these examples are for illustrative purposes only, and the scope of the present invention is not intended to be limited thereby.

### <Preparation of Vinyl Chloride/Vinyl Acetate Copolymer Resin Latex Composition>

### Example 1

76 kg of deionized water, 39.55 kg of a vinyl chloride monomer, and 16.95 kg of a vinyl acetate monomer were mixed and introduced into a high-pressure reactor, and emulsion polymerization was allowed at 70°C of the high-pressure reactor to prepare a vinyl chloride/vinyl acetate copolymer resin latex (the prepared vinyl chloride/vinyl acetate copolymer resin latex having Mw=55,000 g/mol, an average particle size (D₅₀)=0.18 µm, and a solid content containing the vinyl chloride/vinyl acetate copolymer resin = 43% by weight).

Styrene/acrylic resin (ASR) powder (Solury 60L™, Hanwha Chemical Thailand, Mw=6500g/mol) was added in an amount of 8.6 parts by weight with respect to 100 parts by weight of the prepared vinyl chloride/vinyl acetate copolymer resin latex (corresponding to 20 parts by weight of ASR with respect to 100 parts by weight of the solid content in the vinyl chloride/vinyl acetate copolymer resin latex).

The ASR-added vinyl chloride/vinyl acetate copolymer resin latex was heated to 70°C, and 0.8 parts by weight of a 28% ammonia solution was added thereto.

Thereafter, high-speed stirring was performed at 300 rpm for 2 hours to 3 hours to prepare an aqueous vinyl chloride/vinyl acetate copolymer resin latex composition containing ASR.

### Example 2

An aqueous vinyl chloride/vinyl acetate copolymer resin latex composition containing ASR was prepared in the same manner as in Example 1, except that the ASR powder was added in an amount of 4.3 parts by weight with respect to 100 parts by weight of the vinyl chloride/vinyl acetate copolymer resin latex (corresponding to 10 parts by weight of ASR with respect to 100 parts by weight of the solid content in the vinyl chloride/vinyl acetate copolymer resin latex), and 0.4 parts by weight of the 28% ammonia solution was added.

### Example 3

An aqueous vinyl chloride/vinyl acetate copolymer resin latex composition containing ASR was prepared in the same manner as in Example 1, except that the ASR powder was added in an amount of 0.86 parts by weight with respect to 100 parts by weight of the vinyl chloride/vinyl acetate copolymer resin latex (corresponding to 2 parts by weight of ASR with respect to 100 parts by weight of the solid content in the vinyl chloride/vinyl acetate copolymer resin latex), and 0.1 parts by weight of the 28% ammonia solution was added.

### Comparative Example 1

The vinyl chloride/vinyl acetate copolymer resin latex prepared by emulsion polymerization of the vinyl chloride monomer and the vinyl acetate monomer was used as it is without the post-process of adding the ASR powder and the 28% ammonia solution of Example 1.

### Comparative Example 2

30 parts by weight of ASR powder (Solury 60L™, Hanwha Chemical Thailand, Mw=6500 g/mol) was mixed with 67 parts by weight of deionized water. While heating to 80°C, 3 parts by weight of 28% ammonia solution was divided into two or three portions and added thereto.

Thereafter, high-speed stirring was performed at 300 rpm for 2 hours to 3 hours to prepare an ASR solution.

A vinyl chloride/vinyl acetate copolymer resin latex composition containing ASR was prepared in the same manner as in Example 1, except that the prepared ASR solution was added in an amount of 28.6 parts by weight with respect to 100 parts by weight of the vinyl chloride/vinyl acetate copolymer resin latex (corresponding to 20 parts by weight of ASR with respect to 100 parts by weight of the solid content in the vinyl chloride/vinyl acetate copolymer resin latex) instead of the ASR powder of Example 1.

### Comparative Example 3

An aqueous vinyl chloride/vinyl acetate copolymer resin latex composition containing ASR was prepared in the same manner as in Example 1, except that the ASR powder was added in an amount of 0.43 parts by weight with respect to 100 parts by weight of the vinyl chloride/vinyl acetate copolymer resin latex (corresponding to 1 part by weight of ASR with respect to 100 parts by weight of the solid content in the vinyl chloride/vinyl acetate copolymer resin latex), and 0.04 parts by weight of the 28% ammonia solution was added.

### Comparative Example 4

An aqueous vinyl chloride/vinyl acetate copolymer resin latex composition containing ASR was prepared in the same manner as in Example 1, except that the ASR powder was added in an amount of 23.65 parts by weight with respect to 100 parts by weight of the vinyl chloride/vinyl acetate copolymer resin latex (corresponding to 55 part by weight of ASR with respect to 100 parts by weight of the solid content in the vinyl chloride/vinyl acetate copolymer resin latex), and 0.4 parts by weight of the 28% ammonia solution was added.

### <Preparation of Vinyl Chloride/Acrylic Copolymer Resin Latex Composition>

### Example 4

68 kg of deionized water, 45.2 kg of a vinyl chloride monomer, and 11.3 kg of 2-ethylhexyl acrylate monomer as an acrylic monomer were mixed and introduced into a high-pressure reactor, and emulsion polymerization was allowed at 68°C of the high-pressure reactor to prepare a vinyl chloride/acrylic copolymer resin latex (the prepared vinyl chloride/acrylic copolymer resin latex having Mw=157,000 g/mol, an average particle size (D₅₀)=0.17 µm, and a solid content containing the vinyl chloride/acrylic copolymer resin = 43% by weight).

ASR powder (Solury 60L™, Hanwha Chemical Thailand, Mw=6,500 g/mol) was added in an amount of 8.6 parts by weight with respect to 100 parts by weight of the prepared vinyl chloride/acrylic copolymer resin latex (corresponding to 20 parts by weight of ASR with respect to 100 parts by weight of the solid content in the vinyl chloride/acrylic copolymer resin latex).

The ASR-added vinyl chloride/acrylic copolymer resin latex was heated to 70°C, and 0.8 parts by weight of a 28% ammonia solution was added thereto.

Thereafter, high-speed stirring was performed at 300 rpm for 2 hours to 3 hours to prepare an aqueous vinyl chloride/acrylic copolymer resin latex composition containing ASR.

### Example 5

An aqueous vinyl chloride/acrylic copolymer resin latex composition containing ASR was prepared in the same manner as in Example 4, except that the ASR powder was added in an amount of 4.3 parts by weight with respect to 100 parts by weight of the vinyl chloride/acrylic copolymer resin latex (corresponding to 10 parts by weight of ASR with respect to 100 parts by weight of the solid content in the vinyl chloride/acrylic copolymer resin latex), and 0.4 parts by weight of the 28% ammonia solution was added.

### Example 6

An aqueous vinyl chloride/acrylic copolymer resin latex composition containing ASR was prepared in the same manner as in Example 4, except that the ASR powder was added in an amount of 0.86 parts by weight with respect to 100 parts by weight of the vinyl chloride/acrylic copolymer resin latex (corresponding to 2 parts by weight of ASR with respect to 100 parts by weight of the solid content in the vinyl chloride/acrylic copolymer resin latex), and 0.1 parts by weight of the 28% ammonia solution was added.

### Comparative Example 5

The vinyl chloride/acrylic copolymer resin latex prepared in Example 4 was used as it is without the post-process of adding the ASR powder and the 28% ammonia solution.

### Comparative Example 6

30 parts by weight of ASR powder (Solury 60L™, Hanwha Chemical Thailand, Mw=6500 g/mol) was mixed with 67 parts by weight of deionized water. While heating to 80°C, 3 parts by weight of 28% ammonia solution was divided into two or three portions and added thereto.

Thereafter, high-speed stirring was performed at 300 rpm for 2 hours to 3 hours to prepare an ASR solution.

A vinyl chloride/acrylic copolymer resin latex composition containing ASR was prepared in the same manner as in Example 4, except that the prepared ASR solution was added in an amount of 28.6 parts by weight with respect to 100 parts by weight of the vinyl chloride/acrylic copolymer resin latex (corresponding to 20 parts by weight of ASR with respect to 100 parts by weight of the solid content in the vinyl chloride/acrylic copolymer resin latex) instead of the ASR powder in Example 4.

### Comparative Example 7

An aqueous vinyl chloride/acrylic copolymer resin latex composition containing ASR was prepared in the same manner as in Example 4, except that the ASR powder was added in an amount of 0.43 parts by weight with respect to 100 parts by weight of the vinyl chloride/acrylic copolymer resin latex (corresponding to 1 part by weight of ASR with respect to 100 parts by weight of the solid content in the vinyl chloride/acrylic copolymer resin latex), and 0.04 parts by weight of the 28% ammonia solution was added.

### Comparative Example 8

An aqueous vinyl chloride/acrylic copolymer resin latex composition containing ASR was prepared in the same manner as in Example 4, except that the ASR powder was added in an amount of 23.65 parts by weight with respect to 100 parts by weight of the vinyl chloride/acrylic copolymer resin latex (corresponding to 55 part by weight of ASR with respect to 100 parts by weight of the solid content in the vinyl chloride/acrylic copolymer resin latex), and 0.4 parts by weight of the 28% ammonia solution was added.

### <Preparation of Vinyl Chloride Polymer Resin Latex Composition>

### Example 7

78 kg of deionized water and 87 kg of a vinyl chloride monomer were mixed and introduced into a high-pressure reactor, and emulsion polymerization was allowed at 53.5°C of the high-pressure reactor to prepare a vinyl chloride copolymer resin latex (the prepared vinyl chloride copolymer resin latex having Mw=110,000 g/mol, an average particle size (D₅₀)=0.45 µm, and a solid content containing the vinyl chloride homopolymer resin = 45% by weight).

ASR powder (Solury 60L™, Hanwha Chemical Thailand, Mw=6500 g/mol) was added in an amount of 9 parts by weight with respect to 100 parts by weight of the prepared vinyl chloride polymer resin latex (corresponding to 20 parts by weight of ASR with respect to 100 parts by weight of the solid content in the vinyl chloride polymer resin latex).

The ASR-added vinyl chloride polymer resin latex was heated to 70°C, and 0.6 parts by weight of a 28% ammonia solution was added thereto.

Thereafter, high-speed stirring was performed at 300 rpm for 2 hours to 3 hours to prepare an aqueous vinyl chloride polymer resin latex composition containing ASR.

### Example 8

An aqueous vinyl chloride polymer resin latex composition containing ASR was prepared in the same manner as in Example 7, except that the ASR powder was added in an amount of 4.5 parts by weight with respect to 100 parts by weight of the vinyl chloride polymer resin latex (corresponding to 10 parts by weight of ASR with respect to 100 parts by weight of the solid content in the vinyl chloride polymer resin latex), and 0.4 parts by weight of the 28% ammonia solution was added.

### Example 9

An aqueous vinyl chloride polymer resin latex composition containing ASR was prepared in the same manner as in Example 7, except that the ASR powder was added in an amount of 0.9 parts by weight with respect to 100 parts by weight of the vinyl chloride polymer resin latex (corresponding to 2 parts by weight of ASR with respect to 100 parts by weight of the solid content in the vinyl chloride/acrylic copolymer resin latex), and 0.1 part by weight of the 28% ammonia solution was added.

### Comparative Example 9

The vinyl chloride polymer resin latex prepared in Example 7 was used as it is without the post-process of adding the ASR powder and the 28% ammonia solution.

### Comparative Example 10

30 parts by weight of ASR powder (Solury 60L™, Hanwha Chemical Thailand, Mw=6500g/mol) was mixed with 67 parts by weight of deionized water. While heating to 80°C, 3 parts by weight of 28% ammonia solution was divided into two or three portions and added thereto.

Thereafter, high-speed stirring was performed at 300 rpm for 2 hours to 3 hours to prepare an ASR solution.

A vinyl chloride polymer resin latex composition containing ASR was prepared in the same manner as in Example 7, except that the prepared ASR solution was added in an amount of 28.6 parts by weight with respect to 100 parts by weight of the vinyl chloride polymer resin latex (corresponding to 20 parts by weight of ASR with respect to 100 parts by weight of the solid content in the vinyl chloride polymer resin latex) instead of the ASR powder in Example 7.

### Comparative Example 11

An aqueous vinyl chloride polymer resin latex composition containing ASR was prepared in the same manner as in Example 7, except that the ASR powder was added in an amount of 0.45 parts by weight with respect to 100 parts by weight of the vinyl chloride polymer resin latex (corresponding to 1 part by weight of ASR with respect to 100 parts by weight of the solid content in the vinyl chloride polymer resin latex), and 0.04 parts by weight of the 28% ammonia solution was added.

### Comparative Example 12

An aqueous vinyl chloride polymer resin latex composition containing ASR was prepared in the same manner as in Example 7, except that the ASR powder was added in an amount of 24.75 parts by weight with respect to 100 parts by weight of the vinyl chloride polymer resin latex (corresponding to 55 part by weight of ASR with respect to 100 parts by weight of the solid content in the vinyl chloride polymer resin latex), and 0.04 parts by weight of the 28% ammonia solution was added.

### Experimental Example

If mechanical stability is poor, agglomeration occurs when a shear force such as mixing etc. is applied during blending and processing. Thus, it is difficult to use the composition.

Therefore, while mixing each 150 g of the vinyl chloride-based resin latex compositions prepared in the examples and comparative examples at 7000 rpm using a Homo Disper Mixer, the time taken for the composition to agglomerate due to loss of mechanical stability was measured.

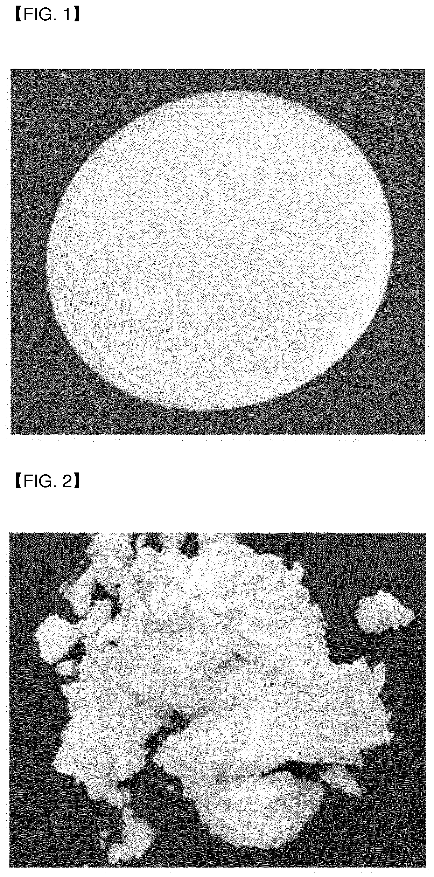

The results are shown in the following Tables 1 to 3, and FIGS. 1 and 2, respectively.

**[Table 1]**

| | Agglomeration time |
|---|---|
| Example 1 | 2 hr or longer |
| Example 2 | 2 hr or longer |
| Example 3 | 2 hr or longer |
| Comparative Example 1 | 17 min |
| Comparative Example 2 | 18 min |
| Comparative Example 3 | 18 min |
| Comparative Example 4 | 13 min |

**[Table 2]**

| | Agglomeration time |
|---|---|
| Example 4 | 2 hr or longer |
| Example 5 | 2 hr or longer |
| Example 6 | 2 hr or longer |
| Comparative Example 5 | 15 min |
| Comparative Example 6 | 14 min |
| Comparative Example 7 | 16 min |
| Comparative Example 8 | 12 min |

**[Table 3]**

| | Agglomeration time |
|---|---|
| Example 7 | 2 hr or longer |
| Example 8 | 2 hr or longer |
| Example 9 | 2 hr or longer |
| Comparative Example 9 | 23 min |
| Comparative Example 10 | 22 min |
| Comparative Example 11 | 23 min |
| Comparative Example 12 | 17 min |

Further, FIG. 1 is a photograph showing a state of the vinyl chloride/vinyl acetate copolymer resin latex composition, when the aqueous vinyl chloride/vinyl acetate copolymer resin latex composition prepared in Example 1 was mixed at 7,000 rpm for a mixing time of 2 hours, and FIG. 2 is a photograph showing the agglomeration state of the aqueous vinyl chloride/vinyl acetate copolymer resin latex composition prepared in Comparative Example 2, when mixed under the same condition for a mixing time of 20 minutes.

Experimental results showed that the vinyl chloride-based resin latex compositions of Examples 1 to 9, to which the powdery ASR resin was added, exhibited remarkably improved mechanical stability, as compared with Comparative Examples 1, 5 and 9 including only the vinyl chloride-based resin latex without ASR and Comparative Examples 2, 6 and 10 including the same vinyl chloride-based resin latex while adding the ASR solution.

Further, Comparative Examples 3, 4, 7, 8, 11, and 12, in which although the solid ASR was used, it was added in an amount of less than 2 parts by weight or more than 50 parts by weight with respect to 100 parts by weight of the solid content containing the vinyl chloride-based resin, exhibited greatly reduced mechanical stability, as compared with Examples 1 to 9.

These results indicate that when the powdery ASR resin was mixed in the optimal amount with respect to the vinyl chloride-based resin latex, the mechanical stability of the vinyl chloride-based resin latex composition may be remarkably improved.

## Claims

1. A method of preparing a vinyl chloride-based resin latex composition, comprising:
mixing a vinyl chloride-based resin latex comprising a vinyl chloride-based resin and a solid-phase styrene/acrylic resin to prepare a mixture; and
adding a basic additive to the mixture,
wherein the styrene/acrylic resin is mixed in an amount of 2 parts by weight to 50 parts by weight with respect to 100 parts by weight of the solid content comprising the vinyl chloride-based resin in the vinyl chloride-based resin latex.

2. The method of preparing the vinyl chloride-based resin latex composition of claim 1, wherein the styrene/acrylic resin is an alkaline soluble resin.

3. The method of preparing the vinyl chloride-based resin latex composition of claim 1, wherein the styrene/acrylic resin is a copolymer obtained by polymerizing a styrene-based monomer and an acrylic monomer at a weight ratio of 60:40 to 80:20.

4. The method of preparing the vinyl chloride-based resin latex composition of claim 1, wherein the styrene/acrylic resin has a weight average molecular weight (Mw) of 1000 g/mol to 20,000 g/mol.

5. The method of preparing the vinyl chloride-based resin latex composition of claim 1, wherein the vinyl chloride-based resin comprises one or more selected from the group consisting of a vinyl chloride homopolymer, a vinyl chloride/vinyl acetate copolymer, and a vinyl chloride/acrylic copolymer.

6. The method of preparing the vinyl chloride-based resin latex composition of claim 5, wherein the vinyl chloride/vinyl acetate copolymer is obtained by polymerizing a vinyl chloride monomer and a vinyl acetate monomer at a weight ratio of 9:1 to 3:7.

7. The method of preparing the vinyl chloride-based resin latex composition of claim 5, wherein the vinyl chloride/acrylic copolymer is obtained by polymerizing a vinyl chloride monomer and an acrylic monomer at a weight ratio of 9:1 to 5:5.

8. The method of preparing the vinyl chloride-based resin latex composition of claim 1, wherein the vinyl chloride-based resin latex has an average particle size (D₅₀) of 0.1 µm to 1 µm.

9. The method of preparing the vinyl chloride-based resin latex composition of claim 1, wherein the vinyl chloride-based resin latex has a weight average molecular weight of 45,000 g/mol to 300,000 g/mol.

10. The method of preparing the vinyl chloride-based resin latex composition of claim 1, wherein the vinyl chloride-based resin latex comprises a vinyl chloride homopolymer, and has a weight average molecular weight of 45,000 g/mol to 150,000 g/mol and an average particle size (D₅₀) of 0.1 µm to 0.7 µm.

11. The method of preparing the vinyl chloride-based resin latex composition of claim 1, wherein the vinyl chloride-based resin latex comprises a vinyl chloride/vinyl acetate copolymer obtained by polymerizing a vinyl chloride monomer and a vinyl acetate monomer at a weight ratio of 8:2 to 3:7, and has a weight average molecular weight of 45,000 g/mol to 150,000 g/mol and an average particle size (D₅₀) of 0.1 µm to 0.7 µm.

12. The method of preparing the vinyl chloride-based resin latex composition of claim 1, wherein the vinyl chloride-based resin latex comprises a vinyl chloride/acrylic copolymer obtained by polymerizing a vinyl chloride monomer and an acrylic monomer at a weight ratio of 8:2 to 5:5, and has a weight average molecular weight of 45,000 g/mol to 200,000 g/mol and an average particle size (D₅₀) of 0.1 µm to 0.7 µm.

13. The method of preparing the vinyl chloride-based resin latex composition of claim 1, wherein the solid content comprising the vinyl chloride-based resin in the vinyl chloride-based resin latex is 30% by weight to 60% by weight.

14. The method of preparing the vinyl chloride-based resin latex composition of claim 1, wherein the basic additive comprises one or two or more selected from the group consisting of ammonia, amine-based compounds, and hydroxides.

15. The method of preparing the vinyl chloride-based resin latex composition of claim 1, wherein addition of the basic additive is performed at a temperature of 40°C to 90°C.

16. The method of preparing the vinyl chloride-based resin latex composition of claim 1, wherein the basic additive is added in such an amount that pH of the vinyl chloride-based resin latex composition is 7 to 9.

17. A vinyl chloride-based resin latex composition comprising: a vinyl chloride-based resin latex comprising a vinyl chloride-based resin, a styrene/acrylic resin, and a basic additive,
wherein the styrene/acrylic resin is comprised in an amount of 2 parts by weight to 50 parts by weight with respect to 100 parts by weight of the solid content comprising the vinyl chloride-based resin in the vinyl chloride-based resin latex.
